# FASCICULE DE BREVET EUROPEEN

(11) **EP 3 953 199 B1**
(45) Date de publication et mention de la délivrance du brevet: **24.05.2023**
(21) Numéro de dépôt: 20716402.1
(22) Date de dépôt: 20.03.2020
(51) Int. Cl.: B60K 1/00, B60K 11/02

(54) **DISPOSITIF DE REFROIDISSEMENT ET DE LUBRIFICATION D'UN GROUPE MOTOPROPULSEUR ÉLECTRIQUE D'UN VÉHICULE AUTOMOBILE ÉLECTRIQUE OU HYBRIDE**
KÜHLUNGS- UND SCHMIERUNGSEINRICHTUNG EINER ELEKTRISCHEN ANTRIEBSBAUGRUPPE EINES ELEKTRO- ODER HYBRID-FAHRZEUGS
COOLING AND LUBRICATION DEVICE OF AN ELECTRIC PROPULSION ASSEMBLY OF AN ELECTRIC OR HYBRID MOTOR VEHICLE

(30) Priorité: 11.04.2019 FR 1903881
(43) Date de publication de la demande: 16.02.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: ASSAAD, Bassel, 78200 Saint Cyr l'école (FR); BORIE, Julien, 78280 Guyancourt (FR)
(74) Mandataire: Renault Group
(86) Numéro de dépôt international: PCT/EP2020/057861
(87) Numéro de publication internationale: WO 2020/207770

(56) Documents cités:
- EP-A1- 3 363 103
- EP-B1- 3 363 103
- WO-A1-2015/181459
- DE-A1-102011 076 525
- FR-A1- 3 030 383

## Description

[L'invention concerne un dispositif de refroidissement et de lubrification d'un groupe motopropulseur électrique, du type comprenant une machine électrique à rotor bobiné et un réducteur de vitesse couplé à ladite machine électrique.

Avec l'augmentation de la densité de puissance des machines électriques destinées aux applications de véhicules automobiles électriques ou hybrides, l'amélioration de l'efficacité de refroidissement de ces machines devient un enjeu primordial. Parmi les solutions connues, le refroidissement par injection directe d'huile sur les éléments chauffants de la machine, est particulièrement intéressant.

On connaît du document de brevet WO2018/206890, un circuit de refroidissement à huile d'une machine électrique à rotor bobiné, qui permet d'assurer le refroidissement du rotor, du stator, ainsi que des joints et roulements du moteur électrique. Il permet également d'assurer la lubrification des joints et roulements. Ce circuit comporte un échangeur de chaleur connecté d'une part à une conduite de prélèvement de liquide de refroidissement, par exemple issu d'un circuit d'eau passant par un radiateur d'échange eau/air du véhicule et, d'autre part, à une conduite de prélèvement d'huile issu d'un réservoir d'huile agencé en partie inférieure de ladite machine électrique, et des moyens de régulation, qui permettent de fournir en sortie de l'échangeur un débit d'huile régulée en température à un circuit de distribution d'huile du circuit de refroidissement, destiné à projeter l'huile régulée en température provenant de l'échangeur de chaleur sur les éléments chauffants de la machine électrique, tandis que l'huile ainsi projetée est récupérée dans le réservoir d'huile, par gravitation.

En particulier, les moyens permettant de réguler la température de l'huile distribuée en sortie de l'échangeur comprennent une vanne thermostatique actionnée par une capsule à cire, placée sur le circuit de refroidissement à huile du moteur de façon à court-circuiter l'échangeur de chaleur associé à ce moteur lorsque la température de l'huile circulant dans le circuit de refroidissement est inférieure à un seuil de température. Ce court-circuitage de l'échangeur de chaleur permet notamment d'accélérer la montée en température de l'huile au démarrage du moteur électrique à basse température. Par contre lorsque la température de l'huile est supérieure au seuil de température, la vanne laisse passer l'huile uniquement vers l'échangeur de chaleur, qui va refroidir l'huile qui sort du réservoir avant de la renvoyer après refroidissement vers le circuit de distribution en amont des éléments chauffants du moteur. Également, lorsque la température de l'huile est au-dessus de ce seuil, une partie du débit d'huile en sortie de l'échangeur de chaleur peut être déviée directement dans le réservoir d'huile agencée sous la machine, sans passer par les éléments chauffants de la machine, de façon à favoriser le refroidissement de l'huile au niveau de l'échangeur à haute température.

Cependant, le principe d'intégrer une vanne avec thermostat à cire dans le circuit d'huile pour permettre de court-circuiter l'échangeur lors d'un fonctionnement à basse température et de faire un retour direct de l'huile au réservoir d'huile sans passer par les éléments chauffants de la machine lors d'un fonctionnement à chaud, présente un certain nombre d'inconvénients. En premier lieu, cette disposition entraîne des risques de fiabilité sur le fonctionnement du thermostat à cire, pouvant être liés d'une part à la compatibilité de la capsule de cire avec l'huile utilisée dans le circuit de refroidissement et, d'autre part, à la plage de températures de fonctionnement imposée pour le pilotage du thermostat à cire. En outre, l'intégration du thermostat à cire dans le circuit d'huile nécessite d'utiliser un capteur de pression pour effectuer un diagnostic du thermostat, en particulier pour s'assurer que la différence de pression entre l'huile dans la vanne et dans le circuit d'huile n'est pas susceptible d'empêcher le mouvement de la capsule de cire. En cas de blocage du thermostat à cire, il y a un risque sécuritaire sur la machine.

Par ailleurs, parmi les systèmes de refroidissement des groupes motopropulseurs électriques comportant une machine électrique à rotor bobiné associée à un réducteur de vitesse, il est connu, notamment par l'exemple qu'en donne le document de brevet EP3363103, d'utiliser l'huile de lubrification du réducteur de vitesse couplé en sortie de la machine électrique pour un refroidissement direct des éléments chauffants de la machine électrique. Ainsi, ce document décrit une machine électrique et un réducteur refroidis par la même huile circulant dans un circuit mettant en commun l'huile de refroidissement de la machine et l'huile de lubrification du réducteur. L'utilisation de l'huile de lubrification du réducteur pour refroidir les éléments chauffants de la machine permet d'augmenter rapidement la température de l'huile à bas régime et de réduire les pertes par frottements. Cependant, lorsque la même huile est utilisée pour le réducteur et la machine électrique, la pollution de l'huile par des polluants du réducteur, typiquement des particules métalliques fines qui se détachent des engrenages du réducteur, risque d'impacter l'isolation diélectrique du moteur à rotor bobiné, en raison des contacts abrasifs se produisant entre ces particules métalliques véhiculées par l'huile commune et les fils de cuivre des bobines du moteur électrique.

De surcroît, dans le cadre du développement de tels groupes motopropulseurs électriques pour une application au train arrière d'un véhicule électrique ou hybride, le refroidissement de l'huile de lubrification du réducteur est problématique. En effet, l'huile circulant dans le circuit de refroidissement de la machine électrique peut être refroidie, comme dans l'exemple donné par le document WO2018/206890 cité plus haut, par un échangeur thermique huile/eau agencé au niveau du circuit de refroidissement à huile de la machine et associé à un circuit d'eau et un radiateur d'échange eau/air du véhicule. Par contre, s'agissant des calories générées dans le réducteur, s'il existe un besoin de les évacuer par un flux d'air, dans le cadre de l'application au train arrière du véhicule, ce flux d'air sous le capot arrière du véhicule peut s'avérer insuffisant pour assurer l'échange thermique souhaité.

Aussi, un but de l'invention est de proposer un dispositif de refroidissement et de lubrification d'un groupe motopropulseur électrique d'un véhicule automobile électrique ou hybride, comprenant une machine électrique à rotor bobiné et un réducteur de vitesse couplé à ladite machine, qui soit exempt au moins en partie des limitations précédemment évoquées.

A cet effet, l'invention concerne un dispositif de refroidissement et de lubrification d'un groupe motopropulseur électrique d'un véhicule automobile électrique ou hybride, comprenant une machine électrique à rotor bobiné et un réducteur de vitesse couplé à ladite machine, ledit dispositif comprenant :
un circuit de refroidissement de ladite machine électrique alimenté en huile, comportant un échangeur de chaleur connecté d'une part à une conduite de prélèvement de liquide de refroidissement issu d'un circuit de liquide de refroidissement reliant des organes du groupe motopropulseur électrique en passant par un radiateur du véhicule et, d'autre part, à une conduite de prélèvement d'huile issu d'un réservoir d'huile agencé en partie inférieure de ladite machine électrique, et des moyens de régulation pour fournir en sortie dudit échangeur de chaleur un débit d'huile régulée en température à un circuit de distribution d'huile dudit circuit de refroidissement apte à projeter l'huile régulée en température provenant dudit échangeur de chaleur sur des éléments chauffants de ladite machine électrique, tandis que l'huile ainsi projetée est récupérée dans ledit réservoir d'huile,
ledit dispositif comprenant aussi :
   un circuit de lubrification dudit réducteur comportant un carter à l'intérieur duquel est logé le réducteur, le fond du carter étant conformé pour constituer une réserve d'huile permettant de lubrifier le réducteur par le déplacement d'un volume d'huile créé par la mise en rotation des éléments du réducteur en contact avec la réserve d'huile,
   ledit dispositif comprenant en outre une conduite de dérivation en sortie dudit échangeur de chaleur apte à acheminer une partie de l'huile régulée en température provenant dudit échangeur de chaleur vers l'entrée d'un réseau de conduits d'échange de chaleur agencés au contact du fond dudit carter du réducteur, de sorte à permettre de refroidir l'huile de ladite réserve d'huile, la sortie dudit réseau de conduits d'échange de chaleur étant reliée audit réservoir d'huile.

Ainsi, l'huile de refroidissement régulée provenant de l'échangeur de chaleur du circuit de refroidissement de la machine électrique est utilisée pour extraire des calories produites par le réducteur grâce au réseau de conduits d'échange de chaleur huile/huile, assurant un échange thermique entre d'une part l'huile de lubrification contenue dans le réducteur et d'autre part l'huile de refroidissement de la machine électrique, sans la nécessité de partager l'huile entre la machine et le réducteur, ou d'installer un autre échangeur spécifique comme un échangeur eau/huile dédié au réducteur. Autrement dit, l'échangeur de chaleur huile/liquide de refroidissement, complété par le circuit de liquide de refroidissement, typiquement un circuit d'eau et le radiateur d'échange eau/air du véhicule, peut être mutualisé entre la machine électrique et le réducteur pour extraire les calories générées dans la machine et le réducteur.

Selon un mode de réalisation, lesdits conduits d'échange de chaleur sont formés dans ledit carter du réducteur. Autrement dit, il s'agit d'un système intégré au réducteur.

Selon un autre mode de réalisation, lesdits conduits d'échange de chaleur sont externes au carter du réducteur.

Avantageusement, ledit circuit de refroidissement comprend une pompe à huile apte à aspirer l'huile dudit réservoir d'huile, ladite pompe à huile étant reliée à ladite conduite de prélèvement d'huile.

Avantageusement, lesdits moyens de régulation comprennent une vanne disposée dans le circuit de liquide de refroidissement en amont de ladite conduite de prélèvement de liquide de refroidissement connectée audit échangeur de chaleur, ladite vanne étant reliée d'une part à ladite conduite de prélèvement et d'autre part à une branche de dérivation qui est piquée sur ledit circuit de liquide de refroidissement pour court-circuiter ledit échangeur de chaleur, ladite vanne étant apte à permettre de dévier une partie au moins du liquide de refroidissement circulant dans le circuit de liquide de refroidissement dans ladite branche de dérivation, en fonction de la température ambiante.

Avantageusement, ladite vanne est disposée dans ledit circuit de liquide de refroidissement entre un onduleur du groupe motopropulseur électrique et ledit échangeur de chaleur.

Avantageusement, ladite vanne peut être une vanne thermostatique actionnée par une capsule à cire ou une électrovanne.

Avantageusement, le circuit de distribution d'huile dudit circuit de refroidissement comporte des canaux d'arrivée d'huile aptes à amener l'huile en regard de joints et roulement agencés de part et d'autre du rotor de ladite machine électrique, et des ajutages modulables fixés sur ces canaux d'arrivée d'huile, destinés à régler le débit d'huile s'échappant de ces canaux vers les joints et roulements.

Avantageusement, le circuit de distribution d'huile dudit circuit de refroidissement comporte des canaux d'arrivée d'huile aptes à amener l'huile en regard d'une périphérie du stator, lesdits canaux débouchant dans deux ajutages opposés situés en périphérie du stator, de façon distale par rapport à un axe longitudinal médian du stator.

L'invention concerne également un véhicule automobile électrique ou hybride comprenant un groupe motopropulseur électrique comprenant une machine électrique à rotor bobiné et un réducteur de vitesse couplé à ladite machine, et un dispositif de refroidissement et de lubrification dudit groupe motopropulseur tel que décrit ci-dessus.

D'autres caractéristiques et avantages de l'invention ressortiront de la description qui en est faite ci-après, à titre indicatif et nullement limitatif, en référence aux dessins annexés, dans lesquels :
[Fig. 1] illustre de façon schématique le dispositif de refroidissement et de lubrification d'un groupe motopropulseur électrique selon un mode de réalisation de l'invention ;
[Fig. 2] illustre de façon schématique le circuit de liquide de refroidissement passant par le radiateur du véhicule, couplé à l'échangeur de chaleur du circuit de refroidissement du dispositif de la figure 1.

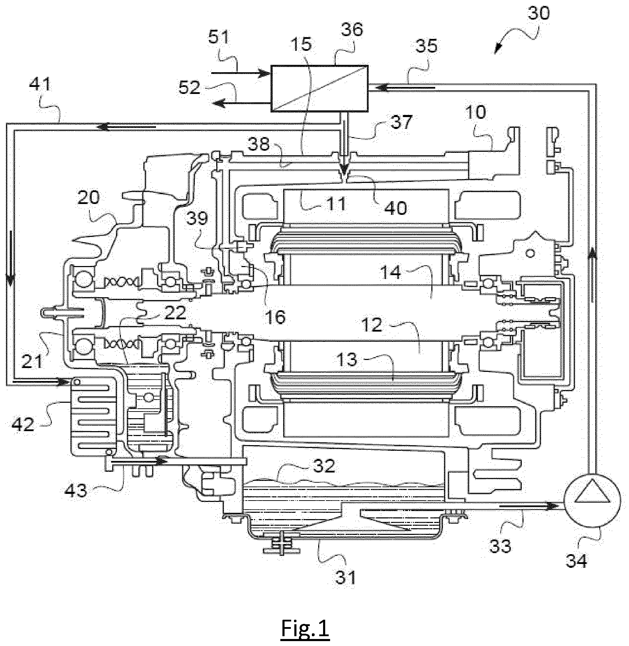

Selon le mode de réalisation illustré à la figure 1, le dispositif de refroidissement et de lubrification selon l'invention est prévu pour refroidir une machine électrique 10 à laquelle est couplé un réducteur mécanique de vitesse 20 d'un groupe motopropulseur électrique d'un véhicule automobile électrique ou hybride destiné à être appliqué au train arrière du véhicule.

La machine électrique 10 se compose notamment d'un stator 11 muni d'une culasse et d'un rotor 12 constitué de pôles magnétiques saillants autour desquels sont bobinés des bobinages 13 en cuivre. Le rotor 12 est monté sur un arbre 14 fixé d'une part, au rotor et, d'autre part, à un carter 15 de la machine électrique par l'intermédiaire de roulements et de joints 16.

Le réducteur mécanique de vitesse 20 est intégré dans un carter 21 de réducteur et est couplé en sortie de l'arbre rotor 14. Le réducteur est constitué d'un ensemble d'engrenages destinés à faire varier la vitesse de rotation et le couple de la machine électrique. Une réserve d'huile de lubrification 22 est contenue à l'intérieur du carter réducteur 21 au niveau du fond du carter et est destinée à permettre de lubrifier et refroidir les éléments du réducteur par barbotage de l'ensemble, autrement dit grâce au déplacement d'un volume d'huile créé par la mise en rotation des éléments du réducteur qui sont en contact avec la réserve d'huile.

Par ailleurs, le dispositif de l'invention comprend un circuit de refroidissement à huile 30 de la machine électrique 10, destiné à refroidir les éléments chauffants de la machine que sont le rotor 12 et le stator 11, ainsi qu'à refroidir et lubrifier les éléments que sont les roulements et joints 16 sur lesquels est monté l'arbre rotor, par projection de l'huile sur ces éléments. Pour ce faire, le circuit de refroidissement 30 comprend un réservoir d'huile 31 agencé en partie inférieure du carter de la machine électrique sous celle-ci, et destiné à stocker une réserve d'huile de refroidissement 32 de la machine électrique. Une conduite de sortie d'huile 33 débouche à l'extérieur du réservoir 31 et est reliée à une pompe à huile 34, permettant d'aspirer l'huile de refroidissement stockée dans le réservoir 31. La pompe à huile 34 est reliée à sa sortie à une conduite de prélèvement d'huile 35 amenant l'huile prélevée par la pompe 34 dans un échangeur de chaleur 36, destinée à refroidir l'huile reçue depuis la conduite de prélèvement 35 avant de la réinjecter vers un circuit de distribution d'huile permettant d'amener et de projeter l'huile refroidie au niveau de l'échangeur de chaleur 36 directement sur les éléments chauffants de la machine électrique. L'huile ainsi projetée récupère les calories produites par la machine et retourne ensuite dans le réservoir 31 par gravité.

Le circuit de distribution d'huile du circuit de refroidissement de la machine comporte une entrée vers le stator 37 à partir de laquelle sont distribués des canaux d'arrivée d'huile 38 aptes à amener l'huile refroidie en regard des logements des joints et roulement 16 agencés de part et d'autre du rotor 12 de ladite machine électrique. Ces canaux sont préférentiellement pourvus d'ajutages modulables, fixés sur ces canaux d'arrivée d'huile, de façon à permettre de régler le débit d'huile s'échappant de ces canaux vers les logements de joints et roulements 16. Ces canaux d'arrivée d'huile 38 sont également conçus pour amener l'huile refroidie vers des injecteurs 39 situés de part et d'autre du rotor 12 en vis-à-vis des têtes de bobines du rotor.

Par ailleurs, l'entrée 37 vers le stator du circuit de distribution d'huile est apte à amener l'huile en regard d'une périphérie du stator. Préférentiellement, elle est reliée à des canaux 40 débouchant dans deux ajutages opposés situés en périphérie du stator, de façon distale par rapport à un axe longitudinal médian du stator. Ainsi, grâce à ces deux ajutages ainsi positionnés, par contraste avec une disposition où l'huile serait projetée sensiblement au milieu du stator, une partie seulement de l'huile projetée viendra en contact avec les surfaces de la culasse du stator, tandis qu'une autre partie s'écoulera directement vers le réservoir. Cela permet avantageusement de limiter l'échauffement de l'huile ainsi projetée, ce qui est important pour sa durabilité. En outre, l'huile projetée par les deux ajutages opposés, qui s'écoule vers le réservoir sans entrer en contact avec les surfaces de la culasse du stator, est de l'huile refroidie provenant de l'échangeur de chaleur 36, de sorte qu'en se mélangeant avec l'huile plus chaude contenue dans le réservoir, elle contribuera à réduire la température globale de l'huile de refroidissement stockée dans le réservoir.

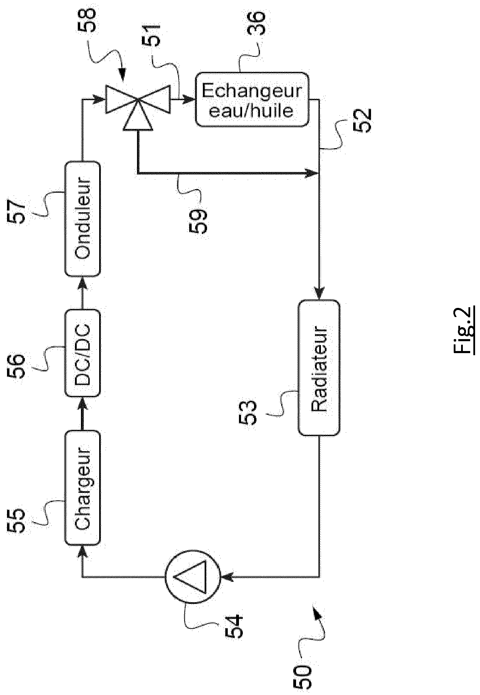

Pour refroidir l'huile provenant de la pompe 34 à travers la conduite de prélèvement d'huile 35, l'échangeur de chaleur 36 est connecté à une conduite 51 de prélèvement de liquide de refroidissement, par exemple du type d'un mélange d'eau avec un antigel, issu d'un circuit de liquide de refroidissement reliant des organes du groupe motopropulseur électrique à l'échangeur de chaleur 36. En référence à la figure 2, l'échangeur de chaleur 36 destiné à refroidir l'huile de refroidissement est donc un échangeur eau-huile fixé au niveau du groupe motopropulseur électrique et partagé avec les autres organes du groupe motopropulseur électrique au travers d'un circuit d'eau 50 passant par le radiateur 53 d'échange eau-air du véhicule. La sortie d'eau 52 de l'échangeur eau/huile 36 fournit de l'eau à une température plus chaude qu'au niveau de la conduite 51 constituant l'entrée d'eau de l'échangeur eau-huile 36, puisque l'eau aura extrait des calories de l'huile au travers de l'échangeur de chaleur 36. L'eau ainsi réchauffée provenant de la sortie d'eau 52 de l'échangeur de chaleur 36 est acheminée vers le radiateur 53 d'échange eau-air du véhicule pour être refroidie, puis est fournie au travers du circuit d'eau 50 à une pompe à eau 54 reliée à sa sortie à l'entrée d'eau 51 de l'échangeur de chaleur 36 au travers des autres organes du groupe motopropulseur électrique du véhicule, que sont les unités de chargeur 55, de convertisseur continu-continu 56 et d'onduleur 57, pour l'alimentation de la machine électrique. Ainsi, la pompe à eau 54 assure la circulation entre les différents éléments, et le radiateur 53 assure le refroidissement de l'eau par air.

Comme expliqué précédemment, l'huile de refroidissement de la machine est utilisée pour la lubrification des joints et roulements de la machine. Or, à basse température, notamment pour des températures comprises dans une plage de - 30°C à +5°C, l'huile utilisée est très visqueuse, ce qui est défavorable à la fonction de lubrification souhaitée. Sans cette lubrification, les composants joints et roulements de la machine seront défaillants dès les premiers roulages, d'où la nécessité d'envoyer une petite quantité de l'huile sur ces composants.

En outre, à basse température, au niveau de l'échangeur eau-huile 36 du circuit de refroidissement de la machine, l'eau circulant dans le circuit d'eau refroidie par le radiateur et par l'environnement froid du véhicule, va contribuer à maintenir l'huile passant à travers l'échangeur 36 à basse température. L'huile projetée sur les éléments chauffants de la machine étant maintenue à basse température, il s'en suit la présence de chocs thermiques, en particulier avec la surface des bobinages du rotor, qui chauffent en fonctionnement. De tels chocs thermiques sont néfastes pour la durabilité du bobinage et peuvent entrainer une mise hors service prématurée de la machine électrique. Egalement, la viscosité importante de l'huile à basse température est défavorable au fonctionnement de la machine électrique du fait de l'augmentation des pertes par frottements qui en découle.

Par ailleurs, lors d'un fonctionnement de la machine à haute température, notamment pour des températures supérieures à 5°C, le refroidissement de la machine avec une huile chaude implique d'autres problématiques. Ainsi, pour assurer un échange thermique eau-huile efficace au niveau de l'échangeur du circuit de refroidissement et donc pour garantir une évacuation suffisante des pertes thermiques de la machine, il est nécessaire de spécifier un débit d'huile assez important au niveau de l'échangeur de chaleur. Or, l'augmentation du débit d'huile à partir d'un certain régime de fonctionnement va générer des pertes par frottement dans la machine, due à l'huile, notamment parce qu'elle pourra être piégée dans l'entrefer.

Aussi, pour surmonter ces problèmes, il est nécessaire de pouvoir réguler la température de l'huile amenée en amont de la machine électrique pour refroidir et lubrifier la machine électrique, en tenant compte des conditions de température de fonctionnement de la machine.

Ces moyens de régulation comprennent avantageusement une vanne de régulation 58, qui est intégrée dans le circuit d'eau 50 couplé à l'échangeur eau-huile 36 du circuit de refroidissement de la machine électrique. La vanne 58 est intégrée dans ce circuit d'eau 50 entre l'unité d'onduleur 57 et l'échangeur eau-huile 36. Cette vanne 58 est disposée immédiatement en amont de l'entrée d'eau 51 de l'échangeur eau-huile 36 et est reliée d'une part, à cette entrée d'eau 51 et, d'autre part, à une branche de dérivation 59, qui est piquée sur le circuit d'eau de façon à court-circuiter l'échangeur eau-huile 36. Il s'agit donc d'une vanne à trois voies permettant de contrôler la circulation ou le passage de l'eau entre la conduite d'eau du circuit d'eau où elle est branchée et l'une ou l'autre des deux conduites parmi l'entrée d'eau 51 de l'échangeur eau-huile 36 et la branche de dérivation 59 court-circuitant l'échangeur eau-huile 36. Ainsi, la vanne 58 est apte à permettre de dévier une partie au moins de l'eau arrivant dans l'échangeur eau-huile 36 dans la branche de dérivation 59, en fonction de la température ambiante. La fonction de cette vanne 58 est donc de contrôler le flux d'eau qui passe à travers l'échangeur eau-huile 36, en fonction de la température et donc de réguler en température le débit d'huile qui passe par l'échangeur eau-huile. La vanne 58 est par exemple une électrovanne pilotée par une unité de commande électronique ou est une vanne thermostatique comprenant par exemple un thermostat actionné par une capsule de cire permettant de bloquer ou d'ouvrir le passage dans la voie correspondante.

Ainsi, dans un mode de fonctionnement de la machine électrique à basse température, la température de l'eau étant inférieure à un seuil de température, la vanne 58 est adaptée pour laisser passer l'eau uniquement dans la branche de dérivation 59, qui court-circuite l'échangeur eau-huile 36, l'eau étant ainsi amenée directement en entrée du radiateur air-eau 53 ou, en variante, d'envoyer un faible débit d'eau à l'échangeur eau-huile. De cette manière, la vanne 58 permet d'interdire la circulation d'eau entre le circuit d'eau 50 et l'échangeur eau-huile 36 ou, en variante, ne permet qu'un très faible débit d'eau vers l'échangeur, lorsque la température d'eau est inférieure au seuil de température prédéterminé, correspondant à une condition de fonctionnement de la machine à basse température. De la sorte, lors de la phase de montée en température, tant que la température est au-dessous de ce seuil, l'huile de refroidissement de la machine électrique amenée en amont des éléments chauffants de la machine électrique n'est pas refroidie par l'échangeur eau-huile, ou très peu selon ladite variante, ce qui permet d'assurer un réchauffement rapide de l'huile dans ces conditions de fonctionnement à basse température. Le contrôle de la vanne 58 dans ce mode de fonctionnement permet donc de court-circuiter l'échangeur eau-huile lors d'une phase de montée en température en commandant la circulation de l'eau uniquement dans la branche de dérivation 59.

Grâce à cet agencement, on évite avantageusement la surchauffe de la pompe à huile 34 liée à la viscosité de l'huile à basse température. La durabilité de la pompe s'en trouve améliorée, sans qu'il soit nécessaire de procéder à un surdimensionnement de celle-ci. En outre, grâce au réchauffage rapide de l'huile à basse température, on évite les chocs thermiques entre l'huile et les surfaces des bobinages de la machine sur lesquelles l'huile est projetée. Les pertes par frottement s'en trouvent également fortement réduites.

Il est à noter que les contraintes de refroidissement des autres composants du circuit d'eau (chargeur/convertisseur continu-continu/onduleur) ne permettent pas d'envisager de réguler le débit d'eau entrant dans l'échangeur eau-huile à travers la commande de la pompe à eau du circuit. L'ajout de la vanne 58 dans le circuit d'eau est donc particulièrement avantageuse à cet égard.

Dans un mode de fonctionnement de la machine électrique à chaud, correspondant à un mode de fonctionnement où la température de l'eau est supérieure au seuil de température prédéterminée, la vanne 58 est, dans ce mode, adaptée pour laisser passer l'eau arrivant vers l'échangeur eau-huile 36 uniquement au niveau de l'entrée d'eau 51 de l'échangeur 36. Autrement dit, l'échangeur eau-huile 36 n'est pas court-circuité dans ce mode et l'échangeur eau-huile 36 refroidit ainsi l'huile de refroidissement de la machine provenant de la pompe à huile qui va être distribuée vers les éléments chauffants de la machine. Pour améliorer l'efficacité du refroidissement de l'huile au niveau de l'échangeur eau-huile, la pompe à eau 54 peut être commandée de façon à fournir un débit d'eau supplémentaire qui passera par l'échangeur eau-huile 36. le refroidissement au niveau de l'échangeur est donc amélioré sans nécessiter d'augmenter le débit d'huile au niveau de l'échangeur, ce qui augmenterait, sinon, les pertes par frottement.

La vanne 58 est donc placée sur le circuit d'eau 50 du groupe motopropulseur électrique de façon à court-circuiter l'échangeur eau-huile 36 du circuit de refroidissement de la machine électrique lorsque la température de l'eau sortant du circuit d'eau est inférieure au seuil de température prédéterminé et, dans le cas contraire, à faire passer toute l'eau par l'échangeur eau-huile pour refroidir l'huile de refroidissement qui vient de la machine avant de la renvoyer après refroidissement à cette dernière.

Comme expliqué précédemment, en sortie de l'échangeur 36, l'huile de refroidissement régulée en température provenant de l'échangeur 36 est fournie au circuit de distribution d'huile 37-40 permettant d'amener et de projeter l'huile fournie par l'échangeur de chaleur 36 sur les éléments chauffants de la machine électrique.

Conformément à l'invention, le dispositif de refroidissement et de lubrification comporte également une conduite de dérivation 41 dont l'entrée est piquée en sortie de l'échangeur de chaleur 36 pour acheminer une partie de l'huile régulée provenant de l'échangeur de chaleur 36 vers l'entrée d'un réseau 42 de conduits d'échange de chaleur, agencés au contact du fond du carter 21 du réducteur 20, de sorte à permettre de refroidir l'huile de la réserve d'huile de lubrification du réducteur. En effet, en fonctionnement, le réducteur 20 génère des calories qu'il est nécessaire d'évacuer afin de garantir la bonne lubrification des pièces mécaniques du réducteur et d'éviter la surchauffe de l'huile de lubrification du réducteur. Ainsi, l'huile régulée en température provenant de l'échangeur de chaleur 36 circulant au travers du réseau 42 de conduits d'échange de chaleur au contact du fond de carter du réducteur 20 va permettre d'extraire les calories de l'huile contenue au niveau du fond de carter du réducteur, qui elle-même permet de garantir l'évacuation des pertes thermiques du réducteur. Autrement dit, le réseau 42 de conduits d'échange de chaleur dans lequel est acheminée l'huile en provenance de l'échangeur de chaleur 36 pour réaliser l'échange thermique souhaité avec l'huile contenue dans le réducteur, constitue un échangeur huile-huile pour le refroidissement de l'huile contenue dans le réducteur. Par la suite, la sortie de l'échangeur huile-huile 42 est reliée au réservoir 31 d'huile de refroidissement agencée sous la machine électrique, par l'intermédiaire d'une conduite de sortie 43 acheminant l'huile vers le réservoir 31.

La conduite de dérivation 41 pour acheminer l'huile de refroidissement de la machine depuis la sortie de l'échangeur 36 vers l'échangeur huile-huile avec l'huile de lubrification du réducteur, peut être une conduite externe ou une conduite interne au carter du réducteur. Egalement, les conduits d'échange de chaleur agencés au contact du fond de carter du réducteur pour réaliser l'échangeur huile-huile sont soit formés dans le carter réducteur, soit externes.

## Revendications

1. Dispositif de refroidissement et de lubrification d'un groupe motopropulseur électrique d'un véhicule automobile électrique ou hybride, comprenant une machine électrique à rotor bobiné (10) et un réducteur de vitesse (20) couplé à ladite machine, ledit dispositif comprenant :
un circuit de refroidissement (30) de ladite machine électrique alimenté en huile, comportant un échangeur de chaleur (36) connecté d'une part à une conduite de prélèvement de liquide de refroidissement (51) issu d'un circuit de liquide de refroidissement (50) reliant des organes du groupe motopropulseur électrique en passant par un radiateur (53) du véhicule et, d'autre part, à une conduite de prélèvement d'huile (35) issu d'un réservoir d'huile (31) agencé en partie inférieure de ladite machine électrique (10), et des moyens de régulation pour fournir en sortie dudit échangeur de chaleur un débit d'huile régulée en température à un circuit de distribution d'huile (37-40) dudit circuit de refroidissement apte à projeter l'huile régulée en température provenant dudit échangeur de chaleur sur des éléments chauffants de ladite machine électrique, tandis que l'huile ainsi projetée est récupérée dans ledit réservoir d'huile, ledit dispositif comprenant aussi :
un circuit de lubrification dudit réducteur comportant un carter (21) à l'intérieur duquel est logé le réducteur, le fond du carter étant conformé pour constituer une réserve d'huile (22) permettant de lubrifier le réducteur par le déplacement d'un volume d'huile créé par la mise en rotation des éléments du réducteur en contact avec la réserve d'huile,
ledit dispositif comprenant en outre une conduite de dérivation (41) en sortie dudit échangeur de chaleur (36) apte à acheminer une partie de l'huile régulée en température provenant dudit échangeur de chaleur (36) vers l'entrée d'un réseau de conduits d'échange de chaleur (42) agencés au contact du fond dudit carter du réducteur, de sorte à permettre de refroidir l'huile de ladite réserve d'huile, la sortie dudit réseau de conduits d'échange de chaleur (42) étant reliée audit réservoir d'huile (31).

2. Dispositif selon la revendication 1, **caractérisé en ce que** lesdits conduits d'échange de chaleur sont formés dans ledit carter (21) du réducteur.

3. Dispositif selon la revendication 1, **caractérisé en ce que** lesdits conduits d'échange de chaleur sont externes au carter (21) du réducteur.

4. Dispositif selon l'une quelconque des revendications précédentes, **caractérisé en ce que** ledit circuit de refroidissement comprend une pompe à huile (34) apte à aspirer l'huile dudit réservoir d'huile (31), ladite pompe à huile étant reliée à ladite conduite de prélèvement d'huile (35).

5. Dispositif selon l'une quelconque des revendications précédentes, **caractérisé en ce que** lesdits moyens de régulation comprennent une vanne (58) disposée dans le circuit de liquide de refroidissement (50) en amont de ladite conduite de prélèvement de liquide de refroidissement (51) connectée audit échangeur de chaleur (36), ladite vanne (58) étant reliée d'une part à ladite conduite de prélèvement (51) et d'autre part à une branche de dérivation (59) qui est piquée sur ledit circuit de liquide de refroidissement (50) pour court-circuiter ledit échangeur de chaleur (36), ladite vanne étant apte à permettre de dévier une partie au moins du liquide de refroidissement circulant dans le circuit de liquide de refroidissement dans ladite branche de dérivation(59), en fonction de la température ambiante.

6. Dispositif selon la revendication 5, **caractérisé en ce que** ladite vanne (58) est disposée dans ledit circuit de liquide de refroidissement entre un onduleur (57) du groupe motopropulseur électrique et ledit échangeur de chaleur (36).

7. Dispositif selon la revendication 5 ou 6, **caractérisé en ce que** ladite vanne (58) est une vanne thermostatique actionnée par une capsule à cire ou une électrovanne.

8. Dispositif selon l'une quelconque des revendications précédentes, **caractérisé en ce que** le circuit de distribution d'huile dudit circuit de refroidissement comporte des canaux d'arrivée d'huile (38) aptes à amener l'huile en regard de joints et roulement (16) agencés de part et d'autre du rotor de ladite machine électrique, et des ajutages modulables fixés sur ces canaux d'arrivée d'huile, destinés à régler le débit d'huile s'échappant de ces canaux vers les joints et roulements.

9. Dispositif selon l'une quelconque des revendications précédentes, **caractérisé en ce que** le circuit de distribution d'huile dudit circuit de refroidissement comporte des canaux d'arrivée d'huile (40) aptes à amener l'huile en regard d'une périphérie du stator (11), lesdits canaux débouchant dans deux ajutages opposés situés en périphérie du stator, de façon distale par rapport à un axe longitudinal médian du stator.

10. Véhicule automobile électrique ou hybride comprenant un groupe motopropulseur électrique comprenant une machine électrique à rotor bobiné et un réducteur de vitesse couplé à ladite machine, et un dispositif de refroidissement et de lubrification dudit groupe motopropulseur selon l'une quelconque des revendications précédentes. 1

## Patentansprüche

1. Vorrichtung zur Kühlung und Schmierung eines elektrischen Antriebsstrangs eines Elektro- oder Hybridkraftfahrzeugs, der eine elektrische Maschine mit gewickeltem Rotor (10) und ein Untersetzungsgetriebe (20), das an die Maschine gekoppelt ist, umfasst, die Vorrichtung umfassend: einen Kühlkreislauf (30) der elektrischen Maschine, der mit Öl versorgt wird, aufweisend einen Wärmetauscher (36), der einerseits an eine Entnahmeleitung für Kühlflüssigkeit (51) aus einem Kühlflüssigkeitskreislauf (50), der Organe des elektrischen Antriebsstrangs über einen Kühler (53) des Fahrzeugs verbindet, und andererseits an eine Entnahmeleitung für Öl (35) aus einem Ölbehälter (31), der im unteren Abschnitt der elektrischen Maschine (10) angeordnet ist, angeschlossen ist, und Regelungsmittel, um am Ausgang des Wärmetauschers einen temperaturgeregelten Ölstrom einem Ölverteilungskreislauf (37-40) des Kühlkreislaufs bereitzustellen, der geeignet ist, das vom Wärmetauscher kommende temperaturgeregelte Öl auf heizende Elemente der elektrischen Maschine zu spritzen, während das so gespritzte Öl im Ölbehälter wieder aufgefangen wird, wobei die Vorrichtung auch Folgendes umfasst:
einen Schmierkreislauf des Untersetzungsgetriebes, der ein Gehäuse (21) aufweist, in dessen Innerem das Untersetzungsgetriebe aufgenommen ist, wobei der Boden des Gehäuses dazu ausgebildet ist, einen Ölvorrat (22) zu bilden, die es ermöglicht, das Untersetzungsgetriebe durch die Bewegung eines Ölvolumens zu schmieren, die durch das Indrehungversetzen der Elemente erzeugt wird, die mit dem Ölvorrat in Kontakt stehen,
wobei die Vorrichtung ferner eine Bypassleitung (41) am Ausgang des Wärmetauschers (36) umfasst, die geeignet ist, einen Teil des vom Wärmetauscher (36) kommenden temperaturgeregelten Öls zum Eingang eines Netzes aus Wärmeaustauschleitungen (42) zu befördern, die in Kontakt mit dem Boden des Gehäuses des Untersetzungsgetriebes angeordnet sind, um es zu ermöglichen, das Öl des Ölvorrats zu kühlen, wobei der Ausgang des Netzes aus Wärmeaustauschleitungen (42) mit dem Ölbehälter (31) verbunden ist.

2. Vorrichtung nach Anspruch 1, **dadurch gekennzeichnet, dass** die Wärmeaustauschleitungen im Gehäuse (21) des Untersetzungsgetriebes gebildet sind.

3. Vorrichtung nach Anspruch 1, **dadurch gekennzeichnet, dass** sich die Wärmeaustauschleitungen außerhalb des Gehäuses (21) des Untersetzungsgetriebes befinden.

4. Vorrichtung nach einem der vorhergehenden Ansprüche, **dadurch gekennzeichnet, dass** der Kühlkreislauf eine Ölpumpe (34) umfasst, die geeignet ist, das Öl aus dem Ölbehälter (31) anzusaugen, wobei die Ölpumpe mit der Ölentnahmeleitung (35) verbunden ist.

5. Vorrichtung nach einem der vorhergehenden Ansprüche, **dadurch gekennzeichnet, dass** die Regelungsmittel ein Ventil (58) umfassen, das im Kühlflüssigkeitskreislauf (50) stromauf der Kühlflüssigkeit- Entnahmeleitung (51) angeordnet ist, die an den Wärmetauscher (36) angeschlossen ist, wobei das Ventil (58) einerseits mit der Entnahmeleitung (51) und andererseits mit einem Bypasszweig (59) verbunden ist, der sich am Kühlflüssigkeitskreislauf (50) befindet, um den Wärmetauscher (36) zu umgehen, wobei das Ventil geeignet ist, wenigstens einen Teil der Kühlflüssigkeit, die im Kühlflüssigkeitskreislauf zirkuliert, je nach der Umgebungstemperatur in den Bypasszweig (59) umzuleiten.

6. Vorrichtung nach Anspruch 5, **dadurch gekennzeichnet, dass** das Ventil (58) im Kühlflüssigkeitskreislauf zwischen einem Wechselrichter (57) des elektrischen Antriebsstrangs und dem Wärmetauscher (36) angeordnet ist.

7. Vorrichtung nach Anspruch 5 oder 6, **dadurch gekennzeichnet, dass** das Ventil (58) ein Thermostatventil ist, das durch eine Wachskapsel oder ein Magnetventil betätigt wird.

8. Vorrichtung nach einem der vorhergehenden Ansprüche, **dadurch gekennzeichnet, dass** der Ölverteilungskreislauf des Kühlkreislaufs Ölzufuhrkanäle (38), die geeignet sind, das Öl an Dichtungen und Lager (16) zu bringen, die beiderseits des Rotors der elektrischen Maschine angeordnet sind, und modulierbare Düsen aufweist, die an diesen Ölzufuhrkanälen befestigt sind, die dazu bestimmt sind, den Strom von Öl zu regeln, das aus diesen Kanälen in Richtung der Dichtungen und Lager austritt.

9. Vorrichtung nach einem der vorhergehenden Ansprüche, **dadurch gekennzeichnet, dass** der Ölverteilungskreislauf des Kühlkreislaufs Ölzufuhrkanäle (40) aufweist, die geeignet sind, das Öl neben einen Rand des Stators (11) zu leiten, wobei die Kanäle in zwei gegenüberliegenden Düsen münden, die sich am Rand des Stators distal zu einer Mittellängsachse des Stators befinden.

10. Elektro- oder Hybridkraftfahrzeug umfassend einen elektrischen Antriebsstrang, der eine elektrische Maschine mit gewickeltem Rotor und ein Untersetzungsgetriebe, das an die Maschine gekoppelt ist, umfasst, und eine Vorrichtung zur Kühlung und Schmierung des Antriebsstrangs nach einem der vorhergehenden Ansprüche.

## Claims

1. Device for cooling and lubricating an electric power train of an electric or hybrid motor vehicle, comprising an electric machine with a wound rotor (10) and a speed reducer (20) which is coupled to said machine, said device comprising:
a cooling circuit (30) of said electric machine which is supplied with oil, comprising a heat exchanger (36) which is connected, on the one hand, to a pipe for removing cooling liquid (51) coming from a cooling liquid circuit (50) which connects members of the electric power train passing via a radiator (53) of the vehicle and, on the other hand, to a pipe for removing oil (35) coming from an oil reservoir (31) which is arranged in the lower portion of said electric machine (10) and control means in order to supply at the output of said heat exchanger a flow of oil which is controlled in terms of temperature to an oil distribution circuit (37-40) of said cooling circuit which is capable of projecting the oil which is controlled in terms of temperature and which is from said heat exchanger onto heating elements of said electric machine, whilst the oil projected in this manner is recovered in said oil reservoir,
said device also comprising:
a lubrication circuit of said speed reducer comprising a housing (21) inside which the speed reducer is arranged, the base of the housing being shaped to constitute an oil store (22) which enables the speed reducer to be lubricated by moving a volume of oil generated by the rotation of the elements of the speed reducer in contact with the oil store,
said device further comprising at the output of said heat exchanger (36) a diversion pipe (41) which is capable of conveying a portion of the oil which is controlled in terms of temperature and which is from said heat exchanger (36) to the inlet of a network of heat exchange pipes (42) which are arranged in contact with the base of said housing of the speed reducer in order to enable the oil of said oil store to be cooled, the output of said network of heat exchange pipes (42) being connected to the oil reservoir (31).

2. Device according to Claim 1, **characterized in that** said heat exchange pipes are formed in said housing (21) of the speed reducer.

3. Device according to Claim 1, **characterized in that** said heat exchange pipes are external with respect to the housing (21) of the speed reducer.

4. Device according to any one of the preceding claims, **characterized in that** said cooling circuit comprises an oil pump (34) which is capable of drawing in oil from said oil reservoir (31), said oil pump being connected to said oil removal pipe (35).

5. Device according to any one of the preceding claims, **characterized in that** said control means comprise a valve (58) which is arranged in the cooling liquid circuit (50) upstream of said cooling liquid removal pipe (51) which is connected to said heat exchanger (36), said valve (58) being connected, on the one hand, to said removal pipe (51) and, on the other hand, to a diversion branch (59) which is tapped from said cooling liquid circuit (50) in order to short-circuit said heat exchanger (36), said valve being capable of enabling at least a portion of the cooling liquid flowing in the cooling liquid circuit to be diverted into said diversion branch (59) in accordance with the ambient temperature.

6. Device according to Claim 5, **characterized in that** said valve (58) is arranged in said cooling liquid circuit between a power inverter (57) of the electric power train and said heat exchanger (36).

7. Device according to Claim 5 or 6, **characterized in that** said valve (58) is a thermostatic valve which is activated by a wax capsule or a solenoid valve.

8. Device according to any one of the preceding claims, **characterized in that** the oil distribution circuit of said cooling circuit comprises oil inlet channels (38) which are capable of conveying the oil with respect to joints and bearing (16) which are arranged at one side and the other of the rotor of said electric machine, and flexible nozzles which are fixed to these oil inlet channels and which are intended to control the flow of oil which is discharged from these channels to the joints and bearings.

9. Device according to any one of the preceding claims, **characterized in that** the oil distribution circuit of said cooling circuit comprises oil inlet channels (40) which are capable of conveying the oil with respect to a periphery of the stator (11), said channels opening in two opposing nozzles which are located at the periphery of the stator, in a distal manner relative to a longitudinal center axis of the stator.

10. Electric or hybrid motor vehicle which comprises an electric power train which comprises an electric machine with a wound rotor and a speed reducer which is coupled to said machine, and a device for cooling and lubricating said power train according to any one of the preceding claims.
